# NEUE EUROPÄISCHE PATENTSCHRIFT

(11) **EP 0 364 694 B2**
(45) Veröffentlichungstag und Bekanntmachung des Hinweises auf die Entscheidung über den Einspruch: **06.08.1997**
(45) Hinweis auf die Patenterteilung: 29.06.1994
(21) Anmeldenummer: 89115327.2
(22) Anmeldetag: 19.08.1989
(51) Int. Cl.: B01D 53/56

(54) **Verfahren zur Reduktion von in Abgasen enthaltenen Stickoxiden mittels eines zeolithhaltigen Katalysators**
Process for reducing nitrogen oxides in waste gases with a zeolite containing catalyst
Procédé de réduction d'oxydes d'azote contenue dans des gaz d'échappement avec un catalyseur contenant du zéolithe

(30) Priorität: 03.09.1988 DE 3830045
(43) Veröffentlichungstag der Anmeldung: 25.04.1990
(73) Patentinhaber: BAYER AG, 51368 Leverkusen (DE)
(72) Erfinder: Held, Wolfgang, Dr., D-3180 Wolfsburg (DE); König, Axel, Dr., D-3180 Wolfsburg (DE); Puppe, Lothar, Dr., D-5093 Burscheid (DE)

(56) Entgegenhaltungen:
- DE-A- 2 542 204
- DE-A- 3 001 457
- DE-A- 3 704 030
- DE-A- 3 802 871
- DE-B- 2 458 888
- JP-A-63 190 623
- Firmenschrift der Firma STEULER-INDUSTRIEWERKE GMBH
- J.R.KLOVSKY et al.: IND. ENG. CHEM. PROD. DEV. 1980, 19, pp. 218 - 225
- SAE TECHNICAL PAPER SERIES, 900496

## Beschreibung

Die Erfindung betrifft ein Verfahren gemäß dem Oberbegriff des Patentanspruchs 1. Ein derartiges Verfahren sowie eine Einrichtung zur Durchführung desselben sind aus der DE-A-3642018 bekannt. Wie dort im einzelnen ausgeführt, kann der Zeolith-Katalysator, der als monolithischer Katalysator oder als Schüttgut-Katalysator ausgebildet sein kann, bevorzugt Zeolithe vom Typ X, Y oder Mordenit enthalten. Die Wirkungsweise dieses bekannten Verfahrens beruht darauf, daß die in den Abgasen beispielsweise einer Kraftfahrzeug-Brennkraftmaschine enthaltenen Stickoxide mit den ebenfalls in den Abgasen normalerweise vorhandenen Kohlenwasserstoffen als Reduktionsmittel sowie dem bei Verbrennung eines mageren Kraftstoff-Luft-Gemisches vorhandenen Sauerstoff umgesetzt werden. Damit kann auf die bekannte, aus verschiedenen Gründen insbesondere bei Kraftfahrzeugen problematische Zugabe von Ammoniak als Reduktionsmittel verzichtet werden.

Voraussetzung für die beschriebene Wirkung des bekannten Verfahrens ist also ein bestimmter Mindestwert der Kohlenwasserstoff-Konzentration im Abgas, da diese, wie beschrieben, als Reduktionsmittel dienen. Demgemäß ist das bekannte Verfahren in den Fällen zumindest nicht optimal einsetzbar, in denen, wie bei Dieselmaschinen, die Kohlenwasserstoff-Konzentration im Abgas deutlich geringer als die Stickoxid-Konzentration ist.

In DE-A 25 42 204 wird ein Verfahren zur Entfernung von NOₓ aus einem sauerstoffhaltigen, praktisch kein Schwefeldioxid enthaltenden Abgas beschrieben. Dabei wird dem Abgas Ammoniak bzw. wäßrige Harnstofflösungen zugemischt und ein Katalysator, der ein oder mehrere Metallsulfate enthält, verwendet. Zusätzlich wird dem Abgas vor dem Kontaktieren mit dem Katalysator bis zu 0,07 Volumenprozent Schwefeldioxid zugesetzt.

DE-A 38 02 871 offenbart ein Verfahren zur NOₓ-Reduzierung unter Zugabe von NH₃ und unter Verwendung spezieller Cu-beladener Zeolith-Katalysatoren des modifizierten Y-Typs, mit dem der NH₃-Schlupf verhindert werden kann.

Der Erfindung liegt die Aufgabe zugrunde, ein Verfahren gemäß dem Oberbegriff des Patentanspruches 1 zu schaffen, das ohne Notwendigkeit der Zugabe und demgemäß der vorherigen Speicherung problematischer Reduktionsmittel wie Ammoniak auch zur Reduktion von Stickoxiden in solchen Abgasen einsetzbar ist, deren Kohlenwasserstoff-Konzentration deutlich geringer als die Stickoxid-Konzentration ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung beruht auf der Erkenntnis, daß Harnstoff die Stickoxide in einem Sauerstoff im Überschuß enthaltenden Abgasstrom an einem zeolithhaltigen Katalysator reduziert.

Dies beruht darauf, daß Harnstoff (H₂N-CO-NH₂) leicht zu CO₂ und 2 NH₃ hydrolysiert. Letztlich ist Harnstoff also ein Ammoniak-Speicher. Zwar muß beispielsweise zur Behandlung der von einer Kraftfahrzeug-Brennkraftmaschine emittierten Abgase das Reduktionsmittel in einem fahrzeugfesten Tank mitgeführt werden, jedoch liegt es in unproblematischer Form in Gestalt von wässriger Harnstofflösung vor, und das Ammoniak wird erst später gebildet.

Die Zumessung des Reduktionsmittels kann stöchiometrisch, unter- oder überstöchiometrisch erfolgen. An einem Cu-ausgetauschten Zeolithen vom ZSM-Typ wurde mit Harnstoff beispielsweise folgende NOₓ-Reduktion erreicht:

| | | | | |
|---|---|---|---|---|
| NOₓ: Harnstoff | 1 : 0,25 | 1 : 0,41 | 0,52 | 1 : 0,83 |
| NOₓ-Umsatz | % 50 % | 74 % | 83 % | 99 % |

Die Reduktionsmittelzugabe wird man demgemäß in Abhängigkeit von der Betriebsweise bzw. Betriebsgrößen der das Abgas erzeugenden Einrichtung, also beispielsweise einer Brennkraftmaschine, steuern oder regeln. Beispielsweise bei einer Fahrzeug-Brennkraftmaschine ergibt sich im Fahrberieb in Abhängigkeit von dem jeweiligen Betriebspunkt der Maschine, der zum Beispiel durch Drehzahl und Last definiert ist, im Abgas eine bestimmte Stickoxid-Konzentration, und die Steuerung bzw. Regelung der Reduktionsmittelzugabe erfolgt so, daß das Abgas in Strömungsrichtung hinter dem zeolithischen Katalysator möglichst geringe Anteile an Reduktionsmittel und Stickoxiden enthält.

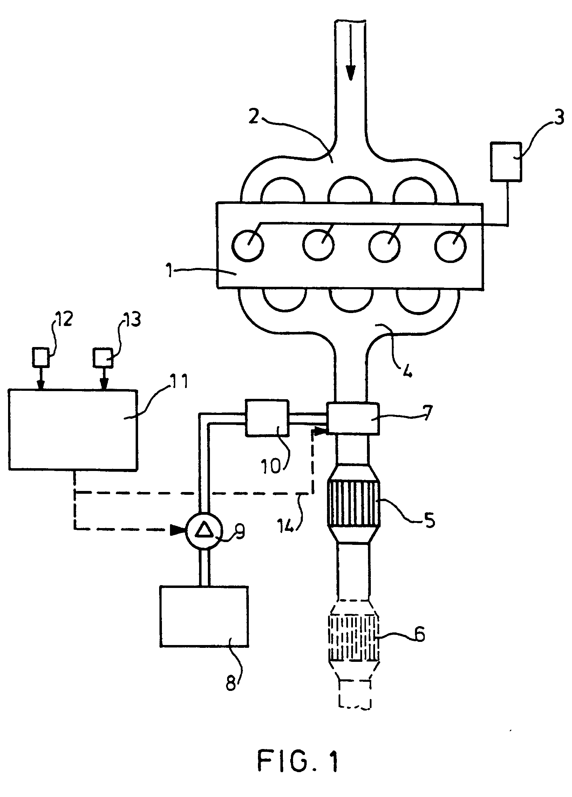

Die Erfindung wird im folgenden anhand der Zeichnung erläutert, die ein Ausführungsbeispiel für eine Einrichtung zur Durchführung des erfindungsgemäßen Verfahrens an einer Fahrzeug-Brennkraftmaschine wiedergibt.

In dem dargestellten Ausführungsbeispiel handelt es sich um eine Diesel-Brennkraftmaschine 1 mit Ansaugleitung 2, Kraftstoffzuführung 3 und Abgasanlage 4. Von dieser gelangen die Abgase zu dem zeolithischen Katalysator 3, der einen im einzelnen aus der eingangs genannten DE-OS 3642018 bekannten Aufbau bzw. eine entsprechende Zusammensetzung besitzen kann, und von diesem in den Oxidationskatalysator 6, der aber auch in Fortfall kommen kann.

In Strömungsrichtung vor dem Zeolithkatalysator 5 liegt die Zugabevorrichtung 7 für ein Harnstoff enthaltendes oder vollständig aus Harnstoff bestehendes Reduktionsmittel. Dieses ist in flüssigr Form in dem Tank 8 gespeichert und wird über die Pumpe 9 nach Zersetzung mittels der nur im Kaltstartfall wirksamen Heizeinrichtung 10 in die Zuführvorrichtung 7 gefördert. Die Heizeinrichtung 10 besitzt einen an sich bekannten Aufbau; beispielsweise kann sie als wesentliche Bestandteile eine Glühkerze oder einen elektrisch beheizten Igel enthalten. Bei warmer Maschine erfolgt die Zersetzung der Harnstoffe durch das heiße Abgas.

Die Fördermenge der Pumpe 9 wird so gesteuert bzw. geregelt, daß die zur Reduktion der jeweils im Abgas vorliegenden Stickoxidmenge erforderliche Menge des Reduktionsmittels bei 7 dem Abgas zugeführt wird. Der Stickoxidgehalt des Abgases ist abhängig von der jeweiligen Betriebsweise der Brennkraftmaschine 1, wobei der jeweilige Betriebspunkt durch die jeweiligen Werte von Drehzahl und Last der Maschine 1 definiert werden kann. Demgemäß wird die Pumpe 9 über einen Kennfeldspeicher 11 hinsichtlich ihrer Fördermenge gesteuert oder geregelt, dem Signale eines Drehzahlsensors 12 und eines Lastsensors 13 der Maschine 1 zugeführt werden und in dem den verschiedenen Drehzahl- und Lastwerten entsprechende Werte für den Stickoxidgehalt des Abgases der Maschine 1 gespeichert sind. Der Speicher 11 liefert dann dem jeweiligen Stickoxidgehalt entsprechende Ansteuersignale an die Pumpe 9.

Wie durch die Linie 14 angedeutet, kann statt der Pumpe auch die beispielsweise als elektromagnetisches Einspritzventil ausgebildete Einrichtung 7 entsprechend angesteuert werden.

Durch die Erfindung ist also eine Möglichkeit zur Reduktion von in Abgasen enthaltenen Stickoxiden unter Vermeidung problematischer Reduktionsmittel an einem zeolithhaltigen Katalysator auch bei geringem Kohlenwasserstoffgehalt der Abgase geschaffen.

## Patentansprüche

1. Verfahren zur Reduktion von in Abgasen, insbesondere von Dieselmaschinen, enthaltenen Stickoxiden unter oxidierenden Bedingungen mittels eines zeolithhaltigen Katalysators, wobei dem Abgas ein Reduktionsmittel zugegeben wird, dadurch gekennzeichnet, daß als Reduktionsmittel eine Harnstoff enthaltende Substanz zugegeben wird und daß ein Zeolith mit den katalytischen Eigenschaften eines Cu-ausgetauschten Zeolithen verwendet wird.

2. Verfahren nach Anspruch 1, dadurch gekennzeichnet, daß das Reduktionsmittel vor der Zugabe auf Zersetzungstemperatur des Harnstoffes erhitzt wird.

3. Verfahren nach einem der Ansprüche 1 bis 2, dadurch gekennzeichnet, daß die Zugabemenge des Reduktionsmittels in Abhängigkeit von Betriebsgrößen der das Abgas erzeugenden Einrichtung, wie Drehzahl und Last einer Brennkraftmaschine (1), beeinflußt wird.

4. Verfahren nach Anspruch 3, dadurch gekennzeichnet, daß die Zugabemenge mittels eines Kennfeldspeichers (11) für den Stickoxidgehalt der Abgase bei verschiedenen Werten der Betriebsgrößen derart beeinflußt wird, daß jeweils etwa die zur vollständigen Reduktion der Stickoxide erforderliche Menge des Reduktionsmittels zugegeben wird.

## Claims

1. A process for reducing nitrogen oxides contained in exhaust gases, particularly of diesel engines, under oxidising conditions by means of a zeolite-containing catalyst, wherein a reducing agent is added to the exhaust gas, characterised in that a urea-containing substance is added as the reducing agent, and that a zeolite is used which has the catalytic properties of a Cu-exchanged zeolite.

2. A process according to claim 1, characterised in that, before it is added, the reducing agent is heated to the decomposition temperature of the urea.

3. A process according to either one of claims 1 to 2, characterised in that the amount of reducing agent added is influenced depending upon the operating parameters of the device producing the exhaust gas, such as the rotational speed and load of an internal combustion engine (1).

4. A process according to claim 3, characterised in that the amount added is influenced by means of a performance characteristics memory (11) for the nitrogen oxide content of the exhaust gases for various values of the operating parameters in such a way that the amount of reducing agent added is approximately that required in each case for the complete reduction of the nitrogen oxides.

## Revendications

1. Procédé de réduction d'oxydes d'azote contenus dans des gaz d'échappement, notamment de moteurs diesel, dans des conditions oxydantes au moyen d'un catalyseur contenant une zéolite, dans lequel un agent réducteur est ajouté au gaz d'échappement, caractérisé en ce qu'on ajoute comme agent réducteur une substance contenant de l'urée et en ce qu'on utilise une zéolite possédant les propriétés catalytiques d'une zéolite traitée par échange avec du cuivre.

2. Procédé suivant la revendication 1, caractérisé en ce que l'agent réducteur est chauffé avant l'addition à la température de décomposition de l'urée.

3. Procédé suivant les revendications 1 et 2, caractérisé en ce que la quantité ajoutée d'agent réducteur est inflencée en fonction de grandeurs de service du dispositif produisant le gaz d'échappement, telles que la vitesse de rotation et la charge d'un moteur à combustion interne (1).

4. Procédé suivant la revendication 3, caractérisé en ce que la quantité ajoutée est influencée au moyen d une mémoire de champ caractéristique (11) pour la teneur en oxydes d'azote des gaz d'échappement dans le cas de différentes valeurs des grandeurs de service de façon telle que la quantité d'agent réducteur approximativement nécessaire pour la réduction totale des oxydes d'azote soit ajoutée dans chaque cas.
